# EUROPÄISCHE PATENTANMELDUNG

(11) **EP 3 235 743 A1**
(43) Veröffentlichungstag der Anmeldung: **25.10.2017**
(21) Anmeldenummer: 16166040.2
(22) Anmeldetag: 19.04.2016
(51) Int. Cl.: B65B 43/44, B65B 43/52, B65G 15/58

(54) **TRANSPORTEINHEIT MIT UNTERDRUCKVORRICHTUNG UND VERFAHREN ZUM TRANSPORTIEREN VON SCHALEN**

(71) Anmelder: MULTIVAC Sepp Haggenmüller SE & Co. KG, 87787 Wolfertschwenden (DE)
(72) Erfinder: CAPRIOTTI, Luciano, 87730 Bad Grönenbach (DE); MÖRSCHNER, Lars, 87493 Lauben (DE)
(74) Vertreter: Grünecker Patent- und Rechtsanwälte PartG mbB

(57) **Zusammenfassung**

Eine erfindungsgemäße Transporteinheit (10) umfasst eine Abstapelvorrichtung (12), die dazu ausgelegt ist, Schalen (14) aus einem Stapel (16) von Schalen (14) einzeln oder gruppenweise in einen Abwurfbereich (18) abzuwerfen, und eine Transportbandeinheit (20) mit einer den Abwurfbereich (18) durchlaufenden Transportfläche (22) zur Aufnahme und zum Abtransport der abgeworfenen Schalen (14). Erfindungsgemäß weist die Transportfläche (22) zumindest eine Öffnung (28) auf. Es ist eine Unterdruckvorrichtung (30) vorgesehen, die dazu ausgelegt ist, in dem Abwurfbereich (18) durch eine oder mehrere der Öffnungen (28) der Transportfläche (22) hindurch eine Saugwirkung zu erzeugen, die die abgeworfenen Schalen (14) im Abwurfbereich (18) in Richtung auf die Transportfläche (22) hin ansaugt. Dadurch wird ein Abprallen der Schalen (14) an der Transportfläche (22) vermindert. Die Erfindung betrifft auch ein entsprechendes Transportverfahren.

## Beschreibung

Die vorliegende Erfindung betrifft eine Transporteinheit, mit der Schalen aus einem Stapel von Schalen einzeln oder gruppenweise abtransportiert werden können, sowie ein entsprechendes Verfahren zum Transportieren von Schalen.

Zum Verpacken einer Vielzahl von Konsumgütern, insbesondere von Lebensmitteln, werden stapelbare Verpackungen verwendet. Beispiele hierfür sind die im Bereich von Fleischprodukten üblichen, nach dem Befüllen mit einer Folie versiegelbaren Kunststoffschalen. Oftmals werden die Verpackungen gestapelt gelagert und versandt, um Platz zu sparen. Zum Befüllen mit Produkten müssen die Verpackungen dann aber einzeln oder gruppenweise einer Befüllstation zugeführt werden.

Es ist beispielsweise aus der Praxis bekannt, mittels einer einen Stapel von Kunststoffschalen aufnehmenden Abstapelvorrichtung in einem bestimmten zeitlichen Abstand jeweils die unterste Schale des Stapels auf ein unter der Abstapelvorrichtung verlaufendes Transportband abzuwerfen. Die so aus dem Stapel separierten Schalen werden dann mit dem Transportband zu einer Befüllstation verbracht, wo sie mit den gewünschten Produkten, insbesondere Lebensmitteln, befüllt werden. Dann werden die befüllten Schalen weiter zu einer Siegelstation gebracht, wo sie mit einer Kunststofffolie versiegelt werden.

Eine Abstapelvorrichtung, mit der in einem festen zeitlichen Intervall jeweils die unterste Schale aus einem Stapel von Schalen auf ein unter der Abstapelvorrichtung hindurchgeführtes Transportband abgeworfen wird, ist aus der EP 1 685 047 B1 bekannt.

Nachteilig beim Abwerfen von Schalen, insbesondere Verpackungsschalen, aus einem Stapel auf ein unter dem Stapel durchlaufendes Transportband ist, dass insbesondere leichte Schalen nach dem Auftreffen auf das Transportband von diesem abprallen können. Da während des Abpralls die notwendige Friktion zwischen Schale und Transportband nicht vorhanden ist, kann die Schale die Transportgeschwindigkeit des Transportbands dann nicht sofort aufnehmen. Dies führt zu einem unregelmäßigen Durchrutschen des Transportbands unter den abgeworfenen Schalen während des Aufpralls und damit zu einem unregelmäßigen Abstand hintereinander abgeworfener Schalen in Transportrichtung. Außerdem wird bereits bei einem geringfügigen Abprall die Orientierung der Schale auf dem Transportband unvorhersehbar, was bei nachfolgenden Verarbeitungsschritten nachteilig sein kann.

Es ist daher Aufgabe der Erfindung, eine Transporteinheit sowie ein Verfahren zum Transportieren von Schalen bereitzustellen, mit denen ein Abwerfen von Schalen aus einem Stapel von Schalen auf eine Transportfläche hinsichtlich der Positionsgenauigkeit der Schalen verbessert wird.

Diese Aufgabe wird durch den Gegenstand der Ansprüche 1 und 9 gelöst. Die abhängigen Ansprüche geben vorteilhafte Ausführungsformen der Erfindung an.

Obwohl der Hintergrund der Erfindung mit Bezug auf das Abstapeln und Abtransportieren von Verpackungen erläutert wurde und auch eine bevorzugte Anwendung der Erfindung auf diesem Gebiet liegt, ist die Erfindung nicht darauf beschränkt, sondern allgemein auf das Abstapeln und Abtransportieren von stapelbaren Schalen aus einem Stapel von Schalen anwendbar.

Eine erfindungsgemäße Transporteinheit umfasst eine Abstapelvorrichtung, die zum Abwerfen von Schalen aus einem Stapel von Schalen in einen Abwurfbereich ausgelegt ist. Das Abwerfen der Schalen kann dabei einzeln oder gruppenweise erfolgen. Das Abwerfen der Schalen aus dem Stapel kann durch aktives Beschleunigen für eine Bewegung in den Abwurfbereich erfolgen. Dies ist aber nicht notwendig. Alternativ kann beim Abwerfen einer Schale eine auf die Schale ausgeübte Haltekraft ausgesetzt werden und die Schale so in den Abwurfbereich fallengelassen werden. Auch Mischformen zwischen aktivem Abwerfen und Fallenlassen sind möglich. Die erfindungsgemäße Transporteinheit umfasst eine Transportbandeinheit mit einer den Abwurfbereich durchlaufenden Transportfläche zur Aufnahme und zum Abtransport der abgeworfenen Schalen. Vorteilhafterweise durchläuft die Transportfläche den Abwurfbereich unterhalb der Abstapelvorrichtung, sodass die Schalen von der Abstapelvorrichtung lediglich auf die Transportfläche fallengelassen werden müssen.

Die Transportfläche weist erfindungsgemäß zumindest eine Öffnung auf. Die Transporteinheit umfasst eine Unterdruckvorrichtung, die dazu ausgelegt ist, in dem Abwurfbereich durch eine oder mehrere der Öffnungen der Transportfläche hindurch eine Saugwirkung zu erzeugen, die die abgeworfenen Schalen im Abwurfbereich in Richtung auf die Transportfläche hin ansaugt.

Durch die Saugwirkung der Unterdruckvorrichtung wird ein beim Abwerfen einer Schale zwischen der Schale und der Transportfläche vorhandenes Luftpolster abgesaugt. Dadurch wird ein Abprallen der Schale von der Transportfläche verhindert oder zumindest die Stärke des Abprallens vermindert. Somit kann die Positionierungsgenauigkeit der Schalen auf der Transportfläche verbessert werden, insbesondere bezüglich der Ausrichtung der Schalen. Ein weiterer positiver Effekt der Saugwirkung ist, dass die Schalen direkt nach dem Auftreffen auf die Transportfläche in dem Abwurfbereich durch die aufgrund der Saugwirkung entstehende Druckdifferenz auf die Transportfläche aufgedrückt werden. Dadurch kann die für den Abtransport der Schalen notwendige Friktion zwischen einer Schale und der Transportfläche sehr schnell erreicht werden. Auch dies verbessert die Positionierungsgenauigkeit der Schalen auf der Transportfläche, insbesondere bezüglich des Abstands aufeinanderfolgender Schalen. Zudem wird ein zügigerer Abtransport der Schalen ermöglicht, wodurch eine höhere Taktleistung erreicht werden kann.

Die Transportbandeinheit der erfindungsgemäßen Transporteinheit lässt sich auf verschiedene Arten realisieren.

Gemäß einer einfachen Ausführungsform umfasst die Transportbandeinheit ein Transportband, welches den Abwurfbereich durchläuft und die Transportfläche bildet. In dem Transportband kann eine Vielzahl von Öffnungen beliebiger Form vorgesehen sein, durch die hindurch die Saugwirkung erzeugt wird. Vorteilhafterweise sind entlang der gesamten Länge des Transportbands in bestimmten Abständen voneinander immer wieder Öffnungen vorgesehen, sodass bei laufendem Transportband immer eine oder mehrere Öffnungen im Abwurfbereich vorhanden sind. Es wäre aber auch denkbar, dass das Transportband nur in bestimmten Bereichen entlang seiner Erstreckungsrichtung Öffnungen aufweist. Bei Bedarf könnte die Umlaufgeschwindigkeit des Transportbands an den Abwurftakt der Abstapelvorrichtung angepasst werden, um sicherzustellen, dass beim Auftreffen einer Schale auf die Transportfläche immer gerade eine oder mehrere Öffnungen der Transportfläche im Abwurfbereich vorhanden sind, sodass die Schale im Abwurfbereich in Richtung auf die Transportfläche hin angesaugt werden kann.

Gemäß einer anderen Ausführungsform umfasst die Transportbandeinheit ein Gliederband, welches zumindest teilweise oder vollständig die Transportfläche bildet. In diesem Fall können Zwischenräume zwischen den Gliedern des Gliederbands die Öffnungen der Transportfläche bilden. Ausführungsformen mit einem Gliederband lassen sich einfach realisieren, da Gliederbänder verschiedener Art bereits seit Längerem bekannt sind (siehe als Beispiel die WO 99/65801 A1) und kommerziell erhältlich sind.

Gemäß einer weiteren Ausführungsform umfasst die Transportbandeinheit mehrere voneinander beabstandete, parallel laufende Transportbänder, die zusammen die Transportfläche zumindest teilweise oder vollständig bilden. Jeweils ein Zwischenraum zwischen benachbarten Transportbändern kann dabei eine Öffnung der Transportfläche bilden, durch die die Saugwirkung erzeugt wird. Prinzipiell ist es ausreichend, wenn die Transportbandeinheit hierfür zwei voneinander beabstandete, parallel laufende Transportbänder umfasst. Abgeworfene Schalen können dann zu beiden Seiten des Zwischenraums zwischen den Transportbändern jeweils auf einem Transportband aufliegen. Durch den zwischen den Transportbändern vorhandenen Zwischenraum kann durch die Unterdruckvorrichtung die Saugwirkung auf die Schalen erzeugt werden. Je nach Art der zu transportierenden Schalen kann es aber auch sinnvoll sein, eine größere Anzahl von voneinander beabstandeten, parallel laufenden Transportbändern vorzusehen, beispielsweise mehr als 5 oder mehr als 10 Transportbänder. Mit einer größeren Zahl von Transportbändern kann die Auflagestabilität der Schalen auf der Transportfläche erhöht werden.

Die Unterdruckvorrichtung kann einen Vakuumerzeuger und einen damit verbundenen Ansaugaufsatz mit einer Ansaugöffnung umfassen, durch die Luft eingesaugt werden kann. Der Ansaugaufsatz kann in dem Abwurfbereich auf der den abgeworfenen Schalen gegenüberliegenden Seite der Transportfläche vorgesehen sein. Mit dem Ansaugaufsatz lassen sich der Ort und die räumliche Ausdehnung der Saugwirkung definieren. Je nach Größe und/oder Gewicht der abgeworfenen Schalen kann ein geeigneter Ansaugaufsatz gewählt werden, um ein Abprallen der Schalen von der Transportfläche zu verhindern.

Besonders effizient lässt sich das Abprallverhalten der Schalen verbessern, wenn ein Querschnitt der Ansaugöffnung zumindest eine Bodenfläche der Schale abdeckt, mit der diese nach dem Abwurf auf der Transportfläche steht.

Bevorzugt wird die Erfindung auf das Abstapeln und Abtransportieren von Kunststoffschalen, Kartonschalen, Aluschalen, Glasschalen oder Schalen aus geschäumtem Material, insbesondere aus Styropor, angewandt. Bei solchen Schalen, wie sie insbesondere in der Verpackungsindustrie, im Speziellen für die Verpackung von Lebensmitteln, verwendet werden, ist oftmals ein besonders ausgeprägtes Luftpolster zwischen Schale und Transportfläche vorhanden. Der positive Effekt des Absaugens des Luftpolsters durch die Unterdruckvorrichtung auf das Abprallverhalten ist dann besonders ausgeprägt.

Die Schalen können eine rechteckige oder im Wesentlichen rechteckige (beispielsweise rechteckig mit abgerundeten Ecken) Bodenfläche aufweisen. Die Erfindung ist allerdings nicht darauf beschränkt. Insbesondere können die Schalen auch eine anders geformte Bodenfläche aufweisen. Beispielsweise sind Schalen mit einer runden oder ovalen Bodenfläche denkbar (becherförmige Schalen).

Gemäß einer vorteilhaften Ausführungsform ist die Transporteinheit Teil einer Verpackungsanlage, wobei es sich bei den abzuwerfenden und abzutransportierenden Schalen um zu befüllende und/oder zu verschließende Verpackungen handeln kann. Vorteilhafterweise ist die Transportbandeinheit dazu konfiguriert, die abgeworfenen Verpackungen zu einer Schalenverschließmaschine der Verpackungsanlage abzutransportieren. Auf dem Weg dorthin können die Verpackungen an einer Befüllstation mit Füllgut bestückt werden. Die Verpackungen können von der Transportbandeinheit entweder vollständig bis zu der Schalenverschließmaschine transportiert werden oder auch nur in Richtung auf die Schalenverschließmaschine hin transportiert werden, wobei ein letzter Teil des Transports zu der Schalenverschließmaschine von einer anderen Transporteinrichtung übernommen werden kann.

Die Erfindung umfasst auch ein Verfahren zum Transportieren von Schalen. Dieses Verfahren kann mit der erfindungsgemäßen Transporteinheit durchgeführt werden.

Das erfindungsgemäße Verfahren umfasst ein einzelnes oder gruppenweises Abwerfen von Schalen aus einem Stapel von Schalen in einen Abwurfbereich, so dass die Schalen von einer den Abwurfbereich durchlaufenden Transportfläche einer Transportbandeinheit aufgenommen werden. Die abgeworfenen Schalen werden mit der Transportbandeinheit abtransportiert. Erfindungsgemäß umfasst die Transportfläche der Transportbandeinheit zumindest eine Öffnung. Mit einer Unterdruckvorrichtung wird im Abwurfbereich durch eine oder mehrere der Öffnungen der Transportfläche hindurch eine Saugwirkung erzeugt, die die abgeworfenen Schalen in Richtung auf die Transportfläche hin ansaugt.

Wie in Bezug auf die Vorrichtung erläutert, wird durch das Erzeugen der Saugwirkung durch die Unterdruckvorrichtung im Abwurfbereich ein Abprallen der Schalen verhindert oder die Stärke des Abprallens vermindert. Zudem wird direkt nach dem Abwurf die Friktion zwischen Schale und Transportfläche erhöht.

Weitere Merkmale und Vorteile des erfindungsgemäßen Verfahrens lassen sich aus der Beschreibung der Vorrichtung ableiten.

Im Folgenden wird die Erfindung anhand von Ausführungsbeispielen mit Bezug auf die Figuren erläutert. Dabei zeigt
- Fig. 1: eine schematische Draufsicht auf eine Verpackungsanlage mit einer erfindungsgemäßen Transporteinheit gemäß einer Ausführungsform;
- Fig. 2: eine schematische Schnittansicht der in Fig. 1 gezeigten Verpackungsanlage entlang der Schnittlinie A-A aus Fig. 1;
- Fig. 3: eine schematische Teildarstellung eines Schnitts durch die Verpackungsanlage aus Fig. 1 entlang der Schnittlinie B-B;
- Fig. 4: eine schematische Draufsicht auf einen Ausschnitt der Transportfläche einer Transporteinheit gemäß einer weiteren Ausführungsform; und
- Fig. 5: eine schematische Draufsicht auf einen Ausschnitt der Transportfläche einer Transporteinheit gemäß einer weiteren Ausführungsform.

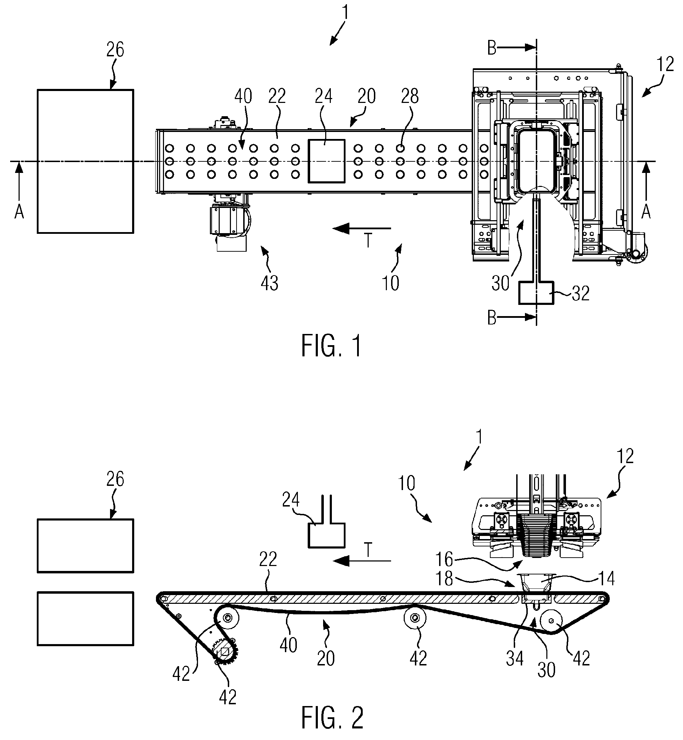

Fig. 1 zeigt in schematischer Draufsicht eine Verpackungsanlage 1 mit einer Transporteinheit 10 gemäß einer Ausführungsform. Fig. 2 zeigt die Verpackungsanlage 1 in einem Schnitt entlang Schnittlinie A-A aus Fig. 1. Die Transporteinheit 10 der Verpackungsanlage 1 umfasst eine Abstapelvorrichtung 12, die dazu ausgelegt ist, Schalen 14 aus einem Stapel 16 einzeln in einen Abwurfbereich 18 abzuwerfen. Es wäre auch ein gruppenweises Abwerfen der Schalen 14 denkbar. In der gezeigten Ausführungsform erfolgt das Abwerfen einer Schale 14 durch Fallenlassen der untersten Schale 14 des Stapels 16. Es wäre aber auch denkbar, eine Abstapelvorrichtung vorzusehen, die die Schalen 14 aktiv abwirft. Die Transporteinheit 10 umfasst zudem eine Transportbandeinheit 20 mit einer den Abwurfbereich 18 durchlaufenden Transportfläche 22. In dem Abwurfbereich 18 werden die abgeworfenen Schalen 14 von der Transportfläche 22 aufgenommen und dann auf der Transportfläche 22 abtransportiert. In der Verpackungsanlage 1 der gezeigten Ausführungsform werden die abgeworfenen Schalen 14 zunächst zu einer Befüllstation 24 abtransportiert, wo sie beispielsweise mit Lebensmitteln befüllt werden können. Dann werden die Schalen 14 weiter zu einer Schalenverschließmaschine 26 transportiert, die dazu ausgelegt ist, die Schalen 14 zu verschließen. Die Schalenverschließmaschine 26 kann beispielsweise eine Siegelstation zum luftdichten Versiegeln von Kunststoffschalen mit einer Folie sein.

Die Transportfläche 22 weist in der in Fig. 1 gezeigten Ausführungsform eine Vielzahl von Öffnungen 28 auf. Die Transporteinheit 10 umfasst eine Unterdruckvorrichtung 30, die dazu ausgelegt ist, in dem Abwurfbereich 18 durch die Öffnungen 28 der Transportfläche 22 hindurch eine Saugwirkung zu erzeugen, die die abgeworfenen Schalen 14 im Abwurfbereich 18 in Richtung auf die Transportfläche 22 hin ansaugt. Dazu umfasst die Unterdruckvorrichtung 30 einen Vakuumerzeuger 32, beispielsweise einen Seitenkanalverdichter, und einen mit diesem verbundenen Ansaugaufsatz 34, der eine Ansaugöffnung 36 definiert.

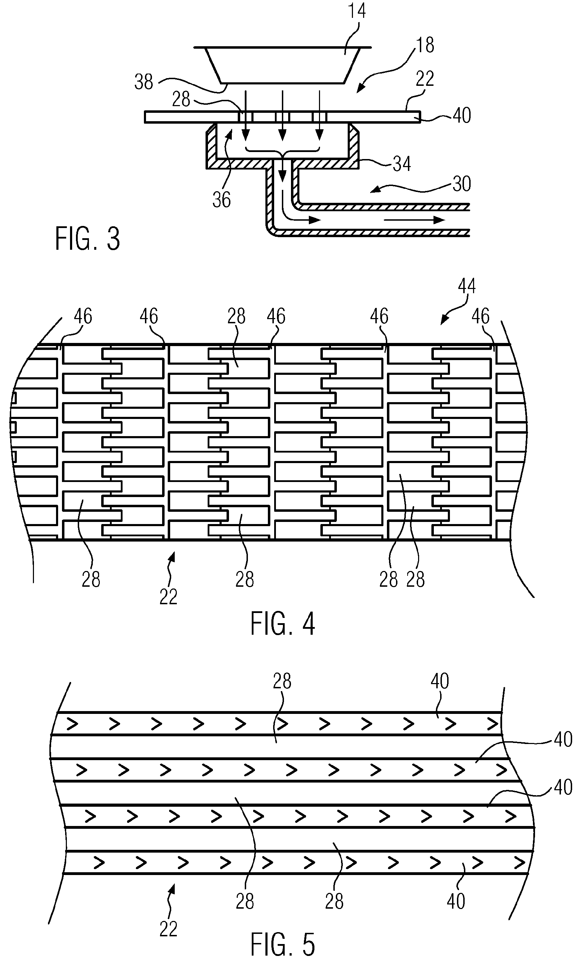

Fig. 3 zeigt einen Ausschnitt einer Schnittansicht durch die Transporteinheit 10 im Abwurfbereich 18 entlang der in Fig. 1 gezeigten Schnittlinie B-B. Wie dort im Detail ersichtlich, ist der Ansaugaufsatz 34 auf der den abgeworfenen Schalen 14 gegenüberliegenden Seite der Transportfläche 22 angeordnet. Die Pfeile in Fig. 3 stellen die Saugwirkung dar, die die Unterdruckvorrichtung 30 durch die Öffnungen 28 der Transportfläche 22 hindurch erzeugt. Ersichtlicherweise werden abgeworfene Schalen 14 im Abwurfbereich 18 in Richtung auf die Transportfläche 22 hin angesaugt. Die Unterdruckvorrichtung 30 saugt ein beim Abwerfen einer Schale 14 zwischen der Schale 14 und der Transportfläche 22 vorhandenes Luftpolster ab. Dadurch kann verhindert werden, dass die Schale 14 nach dem Auftreffen auf die Transportfläche 22 von dieser abprallt und dadurch ihre Position oder Orientierung auf der Transportfläche 22 unvorhersehbar wird. Zudem entsteht durch die Saugwirkung eine Druckdifferenz zwischen einer Oberseite der Schale 14 und einer der Transportfläche 22 zugewandten Bodenfläche 38. Diese Druckdifferenz drückt die Schale 14 auf die Transportfläche 22. Dadurch wird direkt nach dem Abwurf die Friktion der Schale 14 auf der Transportfläche 22 erhöht, wodurch die Schale 14 schnell abtransportiert werden kann und die Transportfläche 22 nicht unter der Schale 14 hindurchläuft, ohne diese mitzunehmen.

Durch den Ansaugaufsatz 34 lässt sich die Saugwirkung der Unterdruckvorrichtung 30 auf den Abwurfbereich 18 beschränken und dort konzentrieren. So kann sichergestellt werden, dass die Saugwirkung tatsächlich in dem Abwurfbereich 18 wirkt, wo sie das Abprallverhalten der Schalen 14 verbessert.

In der in den Fig. 1, 2 und 3 gezeigten Ausführungsform umfasst die Transportbandeinheit 20 ein Transportband 40, welches die Transportfläche 22 bildet. Zum Antrieb und Umlenken des Transportbands 40 umfasst die Transportbandeinheit 20 des Weiteren eine Mehrzahl von Antriebs- oder Umlenkrollen 42, ein Antriebsaggregat 43 und eine Rahmenstruktur für das Transportband 40. Die Öffnungen 28 in der Transportfläche 22 sind gemäß dieser Ausführungsform durch in dem Transportband 40 über dessen gesamte Länge verteilte Öffnungen 28 realisiert. Wie in Fig. 1 gezeigt, können diese Öffnungen 28 einen kreisförmigen Querschnitt aufweisen. Es sind allerdings auch andere geeignete Querschnitte denkbar, wie z. B. ein polygonaler, ein elliptischer, ein halbkreisförmiger oder ein unregelmäßig geformter Querschnitt. Auch Schlitze sind denkbar, solange sie das Erzeugen der Ansaugwirkung durch die Transportfläche 22 hindurch ermöglichen. Die Verteilung und Größe der Öffnungen 28 kann an die zu transportierenden Schalen 14 angepasst werden. Die Öffnungen 28 können beispielsweise jeweils eine Öffnungsfläche von weniger als 1 cm², 2 cm² oder 5 cm² oder mehr als 1 cm², 2 cm² oder 5 cm² aufweisen.

Es ist aber auch denkbar, die Öffnungen 28 in der Transportfläche 22 auf andere Art und Weise auszubilden. Beispielsweise könnte die Transportbandeinheit 20 anstelle des in den Fig. 1, 2 und 3 gezeigten Transportbands 40 ein Gliederband 44 aufweisen, welches die Transportfläche 22 bildet. Ein Ausschnitt einer Draufsicht auf die Transportfläche 22 eines solchen Gliederbands 44 ist in Fig. 4 schematisch dargestellt. Das Gliederband 44 umfasst eine Vielzahl von Gliedern 46, die zum Bilden der Transportfläche 22 zusammenwirken. Gliederbänder 44 verschiedener Ausführungen sind bekannt und sind besonders für Anwendungen geeignet, bei denen die Flexibilität oder Kurvenlaufeigenschaften des Bandes wichtig sind. Wie in Fig. 4 gezeigt, bilden Zwischenräume zwischen den Gliedern 46 des Gliederbands 44 die Öffnungen 28 der Transportfläche 22. Die Unterdruckvorrichtung 30 kann durch diese Zwischenräume hindurch eine Saugwirkung auf die abgeworfenen Schalen 14 erzeugen.

Als weitere Alternative ist es auch denkbar, dass die Transportbandeinheit 20 eine Mehrzahl quer zur Transportrichtung T voneinander beabstandeter, parallel laufender Transportbänder 40 aufweist, die die Transportfläche 22 bilden. Fig. 5 zeigt eine schematische Draufsicht auf eine solche Transportfläche 22. In dieser Ausführungsform ist es nicht notwendig, Öffnungen in den Transportbändern 40 selbst vorzusehen. Das Erzeugen der Saugwirkung durch die Transportfläche 22 hindurch erlaubende Öffnungen 28 sind bereits durch die Zwischenräume zwischen benachbarten Transportbändern 40 gegeben. Die Anzahl der parallel laufenden Transportbänder 40 und das Ausmaß der Zwischenräume zwischen diesen kann je nach Anwendung angepasst werden. Selbstverständlich wäre es auch denkbar, zusätzlich in den einzelnen Transportbändern 40 weitere Öffnungen 28 vorzusehen.

Es wäre auch denkbar, die Unterdruckvorrichtung alternativ so anzubringen, dass sie im Bereich der Befüllstation 24 durch eine oder mehrere der Öffnungen 28 der Transportfläche 22 hindurch eine Saugwirkung erzeugt, die die Schalen 14 im Bereich der Befüllstation 24 in Richtung auf die Transportfläche 22 hin ansaugt. Damit hätten die Schalen 14 im Bereich der Befüllstation 24 einen besseren Halt, wodurch eine Verrutschen der Schalen 14 während des Befüllvorgangs verhindert werden kann. Zusätzlich hätte die Saugwirkung im Bereich der Befüllstation 24 den Effekt, dass Produktanteile, die beim Befüllen unerwünschterweise neben den Schalen 14 auf der Transportfläche 22 gelandet sind, durch die Öffnungen 28 hindurch abgesaugt werden. Die Saugwirkung im Bereich der Befüllstation 24 hätte also zusätzlich zu dem Verbessern des Halts der Schalen 14 eine Reinigungswirkung für die Transportfläche 22. Dies kann insbesondere vorteilhaft sein, wenn die Schalen 14 an der Befüllstation 24 mit Produkten befüllt werden, die beispielsweise Panaden oder Pulver umfassen. Es ist auch denkbar, dass sowohl im Abwurfbereich 18 als auch im Bereich der Befüllstation 24 eine Saugwirkung erzeugt wird. Dies kann durch eine gemeinsame Unterdruckvorrichtung oder durch zwei separate Unterdruckvorrichtungen erreicht werden.

Anstelle einer Siegelstation kann zum Verschließen der Schalen auch eine Aufdeckelstation vorgesehen sein, an der die Schalen 14 mit einem Deckel verschlossen werden. Dies kann manuell oder maschinell erfolgen. Alternativ oder zusätzlich zu den oben ausgeführten Konfigurationen der Unterdruckvorrichtung 30, kann die Unterdruckvorrichtung auch im Bereich einer solchen Aufdeckelstation vorgesehen sein, sodass die Unterdruckvorrichtung im Bereich der Aufdeckelstation durch eine oder mehrere Öffnungen 28 der Transportfläche 22 hindurch eine Saugwirkung erzeugt, die die Schalen 14 im Bereich der Aufdeckelstation in Richtung auf die Transportfläche 22 hin ansaugt. Dadurch erhalten die Schalen 14 einen verbesserten Halt, was das Aufdeckeln erleichtert und verhindern kann, dass die Schalen 14 während des Aufdeckelns verrutschen.

## Patentansprüche

1. Transporteinheit (10), umfassend:
eine Abstapelvorrichtung (12), die dazu ausgelegt ist, Schalen (14) aus einem Stapel (16) von Schalen (14) einzeln oder gruppenweise in einen Abwurfbereich (18) abzuwerfen; und
eine Transportbandeinheit (20) mit einer den Abwurfbereich (18) durchlaufenden Transportfläche (22) zur Aufnahme und zum Abtransport der abgeworfenen Schalen (14),
**dadurch gekennzeichnet,**
**dass** die Transportfläche (22) zumindest eine Öffnung (28) aufweist; und
**dass** eine Unterdruckvorrichtung (30) vorgesehen ist, die dazu ausgelegt ist, in dem Abwurfbereich (18) durch eine oder mehrere der Öffnungen (28) der Transportfläche (22) hindurch eine Saugwirkung zu erzeugen, die die abgeworfenen Schalen (14) im Abwurfbereich (18) in Richtung auf die Transportfläche (22) hin ansaugt.

2. Transporteinheit nach Anspruch 1, wobei die Transportfläche (22) zumindest teilweise von einem Gliederband (44) gebildet wird und Zwischenräume zwischen Gliedern (46) des Gliederbands (44) die Öffnungen (28) der Transportfläche (22) bilden, oder wobei die Transportfläche (22) zumindest teilweise von voneinander beabstandeten, parallel laufenden Transportbändern (40) gebildet wird und jeweils ein Zwischenraum zwischen benachbarten Transportbändern (40) eine Öffnung (28) der Transportfläche (22) bildet.

3. Transporteinheit nach einem der vorangehenden Ansprüche, wobei die Unterdruckvorrichtung (30) einen Vakuumerzeuger (32) und einen mit diesem verbundenen Ansaugaufsatz (34) mit einer Ansaugöffnung (36) umfasst, wobei der Ansaugaufsatz (34) in dem Abwurfbereich (18) auf der den abgeworfenen Schalen (14) gegenüberliegenden Seite der Transportfläche (22) vorgesehen ist.

4. Transporteinheit nach Anspruch 3, wobei ein Querschnitt der Ansaugöffnung (36) zumindest eine Bodenfläche (38) der Schale (14) abdeckt, mit der diese nach dem Abwurf auf der Transportfläche (22) steht.

5. Transporteinheit nach einem der vorangehenden Ansprüche, wobei es sich bei den Schalen (14) um Kunststoffschalen, Kartonschalen, Aluschalen, Glasschalen oder Schalen aus geschäumtem Material handelt.

6. Transporteinheit nach einem der vorangehenden Ansprüche, wobei die Saugwirkung der Unterdruckvorrichtung (30) auf den Abwurfbereich (18) beschränkt ist.

7. Verpackungsanlage (1) mit einer Transporteinheit (10) nach einem der vorangehenden Ansprüche, wobei es sich bei den Schalen (14) um zu verschließende Verpackungen handelt.

8. Verpackungsanlage nach Anspruch 7, die zudem eine Schalenverschließmaschine (26) umfasst, die dazu ausgelegt ist, die Verpackungen zu verschließen, wobei die Transportbandeinheit (20) dazu konfiguriert ist, die abgeworfenen Verpackungen zu der Schalenverschließmaschine (26) abzutransportieren.

9. Verfahren zum Transportieren von Schalen (14), umfassend:
einzelnes oder gruppenweises Abwerfen von Schalen (14) aus einem Stapel (16) von Schalen (14) in einen Abwurfbereich (18), so dass die Schalen (14) von einer den Abwurfbereich (18) durchlaufenden Transportfläche (22) einer Transportbandeinheit (20) aufgenommen werden; und
Abtransportieren der abgeworfenen Schalen (14) mit der Transportbandeinheit (20),
**dadurch gekennzeichnet,**
**dass** die Transportfläche (22) zumindest eine Öffnung (28) aufweist; und
**dass** mit einer Unterdruckvorrichtung (30) eine Saugwirkung im Abwurfbereich (18) durch eine oder mehrere der Öffnungen (28) der Transportfläche (22) hindurch erzeugt wird, wobei die Saugwirkung die abgeworfenen Schalen (14) in Richtung auf die Transportfläche (22) hin ansaugt.

10. Verfahren nach Anspruch 9, wobei die Transportfläche (22) zumindest teilweise von einem Gliederband (44) gebildet wird und Zwischenräume zwischen Gliedern (46) des Gliederbands (44) die Öffnungen (28) der Transportfläche (22) bilden, oder wobei die Transportfläche (22) zumindest teilweise von voneinander beabstandeten, parallel laufenden Transportbändern (40) gebildet wird und jeweils ein Zwischenraum zwischen benachbarten Transportbändern (40) eine Öffnung (28) der Transportfläche (22) bildet.

11. Verfahren nach Anspruch 9 oder 10, wobei es sich bei den Schalen (14) um Kunststoffschalen, Kartonschalen, Aluschalen, Glasschalen oder Schalen aus geschäumtem Material handelt.

12. Verfahren nach einem der Ansprüche 9 bis 11, wobei die mit der Unterdruckvorrichtung (30) erzeugte Saugwirkung auf den Abwurfbereich (18) beschränkt ist.
